# EUROPÄISCHE PATENTSCHRIFT

(11) **EP 2 862 251 B1**
(45) Veröffentlichungstag und Bekanntmachung des Hinweises auf die Patenterteilung: **06.04.2016**
(21) Anmeldenummer: 12735828.1
(22) Anmeldetag: 05.07.2012
(51) Int. Cl.: H02H 1/06, H02M 5/14, H01F 38/38

(54) **VORRICHTUNG FÜR EINEN DREIPHASIGEN VERBRAUCHER**
DEVICE FOR A THREE-PHASE LOAD
DISPOSITIF POUR CHARGE TRIPHASÉE

(43) Veröffentlichungstag der Anmeldung: 22.04.2015
(73) Patentinhaber: Siemens Aktiengesellschaft, 80333 München (DE)
(72) Erfinder: WEISS, Uwe, 92224 Amberg (DE); ZHU, Yi, 64347 Griesheim (DE)
(86) Internationale Anmeldenummer: PCT/EP2012/063133
(87) Internationale Veröffentlichungsnummer: WO 2014/005639

(56) Entgegenhaltungen:
- EP-A1- 1 369 973
- DE-A1- 19 916 111

## Beschreibung

Die Erfindung betrifft eine Vorrichtung für einen dreiphasigen Verbraucher. Der Verbraucher ist insbesondere ein Elektromotor (z.B. Asynchronmotor). Insbesondere betrifft die Erfindung das technische Gebiet der geräteinternen Energieversorgung der Vorrichtung. Die Vorrichtung ist ein Motor- und Leitungsschutzgerät.

Bei einem dreiphasigen Verbraucher weisen entsprechende Vorrichtungen je Phase des Verbrauchers eine Primärleitung (5trornbahri) auf, über welche die über die Phase erfolgende Energieversorgung des Verbrauchers geführt wird.

Ein Schwerpunkt bei elektronischen Motor- und Leitungsschutzgeräten ist, die Energie für die geräteinterne Elektronik der Vorrichtung immer aufrecht zu halten. Üblich ist die Verwendung eines Stromwandlers je Phase des Verbrauchers. Die Stromwandler besitzen hierbei üblicherweise zwei Funktionen, einmal die Strommessung der zugehörigen Phase und zugleich die Bereitstellung der Energie für die geräteinterne Elektronik der Vorrichtung.

Bei Motor- und Leitungsechutzgeräten werden teilweise ebenso Trafo-Netzteile oder Schalt-Netzteile verwendet, welche eine externe Versorgungsspannung benötigen. Dies hat den Vorteil, dass die Energieversorgung auch funktioniert wenn kein Motorstrom fließt.

Aus der EP 136 997 3 A1 ist ein Überlastgerät bekannt, welches die Energieversorgung mittels eines Schalters zu einer Last (z. B: ein Motor) im Fall einer Überlast unterbricht. Zur Stromermittlung wird ein Magnet-Impedanz-Element eingesetzt.

Es ist Aufgabe der vorliegenden Erfindung eine verbesserte Vorrichtung für einen dreiphasigen Verbraucher bereitzustellen. Diese Vorrichtung ist insbesondere platz- und kostensparend konstruierbar. Die geräteinterne Energieversorgung der Vorrichtung soll ferner galvanisch getrennt zur Primärleitung erfolgen. Die geräteinterne Energieversorgung der Vorrichtung wird vorzugsweise ferner während der Betriebszustände: Phasenausfall bei Direktstarter bzw. Inside the Delta Schaltungen (Wurzel-3-Schaltungen), Normalbetrieb, Überlast und/oder Unsymmetrien der Phasenströme sicher aufrecht erhalten.

Mindestens eine dieser Aufgaben wird gelöst durch eine Vorrichtung gemäß Anspruch 1.

Vorteilhafte Weiterbildungen der Erfindung sind in den abhängigen Ansprüchen 2 bis 4 angegeben.

Der Versorgungsstrang des dreiphasigen Verbrauchers wird über die erste, zweite und dritte Primärleitung der Vorrichtung geführt. Die erste Primärleitung ist mit mindestens einer Windung um den ferromagnetischen Körper gewickelt, so dass die erste Primärleiterspule vorliegt. Die zweite Primärleitung ist mit mindestens einer Windung um den ferromagnetischen Körper gewickelt, so dass die zweite Primärleiterspule vorliegt. Die dritte Primärleitung ist mit mindestens einer Windung um den ferromagnetischen Körper gewickelt, so dass die dritte Primärleiterspule vorliegt. Der ferromagnetische Körper umfasst ferner eine Sekundärleiterspule mittels welcher im bestromten Zustand der Primärleiterspulen Energie gewonnen werden kann.

Die erste, zweite und dritte Primärleiterspule und/oder der ferromagnetische Körper selbst sind derart ausgebildet, dass die Primärleiterspulen untereinander unterschiedliche Induktivitäten aufweisen.

Der Wert der Induktivität der einzelnen Primärleiterspulen kann insbesondere mittels der Windungsanordnung, der Windungsform, des Drahtdurchmessers, des Materials der Spule, des Materials des ferromagnetischen Körpers oder der geometrischen Ausbildung des ferromagnetischen Köpers beeinflusst werden. Ebenso können einzelne der genannten Variablen miteinander kombiniert werden, so dass unterschiedliche Induktivitäten erreicht werden.

Dadurch, dass die Primärleiterspulen untereinander unterschiedliche Induktivitäten aufweisen, kann die Energieversorgung der Vorrichtung, welche vorzugsweise ein elektronisches Motor- und Leitungsschutzgerät ist, aus einem 3-Phasennetz ebenso bei einer nicht ordnungsgemäßen Bestromung des Verbrauchers (z.B. bei einem Phasenausfall, bei Unsymmetrien der Phasenströme) sichergestellt werden. Der zur geräteinternen Energieversorgung benötigte Sekundärstrom kann mittels der Sekundärleiterspule vom ferromagnetischen Körper abgegriffen werden. Dadurch, dass die drei Phasenströme innerhalb der Vorrichtung unterschiedlich gewichtet werden, wird sichergestellt, dass bei verschiedenen Betriebszuständen der Vorrichtung, in welcher die Vorrichtung von mindestens einer Phase bestromt wird, der über die Sekundärleiterspule abgegriffene Sekundärstrom sich nicht zu Null ergibt.

Die Energieversorgung der Vorrichtung kann mittels lediglich einer Sekundärleiterspule sichergestellt werden, so dass eine kostengünstige sowie kompakte Vorrichtung bereitgestellt werden kann.

Gemäß der Erfindung erfolgt die Energieversorgung der Vorrichtung lediglich mittels der über die Sekundärleiterspule gewonnenen Energie.

In einer weiteren vorteilhaften Ausführungsform der Erfindung erfolgt die gesamte geräteinterne Energieversorgung der Vorrichtung mittels der über die Sekundärleiterspule gewonnenen Energie.

In einer weiteren vorteilhaften Ausführungsform der Erfindung weisen die Primärleiterspulen bei einer gleichen Stromstärke untereinander unterschiedliche Induktivitäten auf.

In einer weiteren vorteilhaften Ausführungsform der Erfindung sind die Windungszahlen der ersten und zweiten und/oder dritten Primärleiterspule mit dem ferromagnetischen Körper untereinander unterschiedlich.

Vorzugsweise sind die Primarwindungszahlen derart ausgebildet, dass sich im ordnungsgemäßen Betrieb der Vorrichtung der Stromanteil von jeder Phase nicht auf der Sekundarseite (Sekundärleiterspule) gegenseitig aufhebt. Ein mögliches Verhältnis der Windungszahlen der Primärleiterspulen ist beispielsweise 1:2:4; d.h. die erste Primärleiterspule hat lediglich eine Windung, die zweite Primärleiterspule hat lediglich zwei Windungen und die dritte Primärleiterspule hat lediglich vier Windungen.

In einer weiteren vorteilhaften Ausführungsform der Erfindung ist die geometrische Form des ferromagnetischen Körpers derart ausgebildet, dass hierdurch für die erste und dritte und/oder zweite Primärleiterspule untereinander eine unterschiedliche Induktivität erreicht wird.

Die ersten, zweiten und dritten Primärleiterspulen können somit jeweils die gleiche Windungszahl aufweisen. Dadurch, dass der ferromagnetische Körper in Bezug zu den einzelnen Primärleiterspulen unterschiedlich ausgebildet ist (z.B. durch unterschiedliche Querschnitte im Bereich der Windungen der einzelnen Primärleiterspulen und/oder durch einen Luftspalt im ferromagnetischen Körper) können die unterschiedlichen Induktivitäten zwischen den Primärleiterspulen untereinander herbeigeführt werden.
Es versteht sich von selbst, dass ebenso mittels einer Kombination der die Induktivität der Primärleiterspulen beeinflussenden Faktoren (Windungszahl, Form des ferromagnetischen Körpers, Luftspalt, etc.) die unterschiedlichen Induktivitäten der Primärleiterspulen untereinander erzielt werden können.
In einer weiteren vorteilhaften Ausführungsform der Erfindung weist der ferromagnetische Körper mindestens einen Luftspalt auf, so dass hierdurch unterschiedliche Induktivitäten zwischen der ersten, zweiten und/oder dritten Primärleiterspule vorliegen.
In einer weiteren vorteilhaften Ausführungsform der Erfindung ist die Vorrichtung ein Motorschutzschalter. Der Motorschutzschalter schützt Elektromotoren (meist Asynchronmotoren) vor thermischer Überlastung aufgrund mechanischer Überlastung oder bei Ausfall eines einzelnen oder zweier Außenleiter. Fällt beispielsweise ein Außenleiter und somit eine Phase aus, so kann dank der unterschiedlichen Induktivitäten der Primärleiterspulen sichergestellte werden, dass sich die durch die Primärleiterspulen in den ferromagnetischen Körper eingespeiste Energie nicht gegenseitig aufhebt, so dass stets die Energieversorgung der Vorrichtung mittels der Sekundärleiterspule erfolgen kann.

Gemäß der Erfindung ist der ferromagnetische Körper mit mehreren Schenkeln ausgebildet.

Der ferromagnetische Körper kann ein magnetisierbarer massiver oder schichtweise aufgebauter Körper sein. Der Körper aus einem ferromagnetischen Stoff ist z.B. ein Eisenkern.

In einer weiteren vorteilhaften Ausführungsform der Erfindung ist die Vorrichtung keine unmittelbare Komponente des Verbrauchers; d.h. die Vorrichtung ist dezentral zum Verbraucher angeordnet.
In einer weiteren vorteilhaften Ausführungsform der Erfindung ist die Induktivität der ersten, zweiten und dritten Primärleiterspule derart ausgebildet, dass bei einem Ausfall einer oder zweier Phasen die Energieversorgung mittels der Sekundärleiterspule sichergestellt ist.
In einer weiteren vorteilhaften Ausführungsform der Erfindung beträgt der maximale Nennstrom, welche über die erste, zweite und dritte Primärleitung der Vorrichtung geführt wird, maximal 2000 Ampere.
Im Folgenden werden die Erfindung und Ausgestaltungen der Erfindung anhand der in den Figuren dargestellten Ausführungsbeispiele näher beschrieben und erläutert. Es zeigen:
- FIG 1: Eine schematische Darstellung einer Vorrichtung für einen dreiphasigen Verbraucher, die nicht der Erfindung entspricht,
- FIG 2: eine schematische Darstellung einer alternativen Vorrichtung für einen dreiphasigen Verbraucher, und
- FIG 3: eine schematische Darstellung eine weiteren alternativen Vorrichtung für einen dreiphasigen Verbraucher.

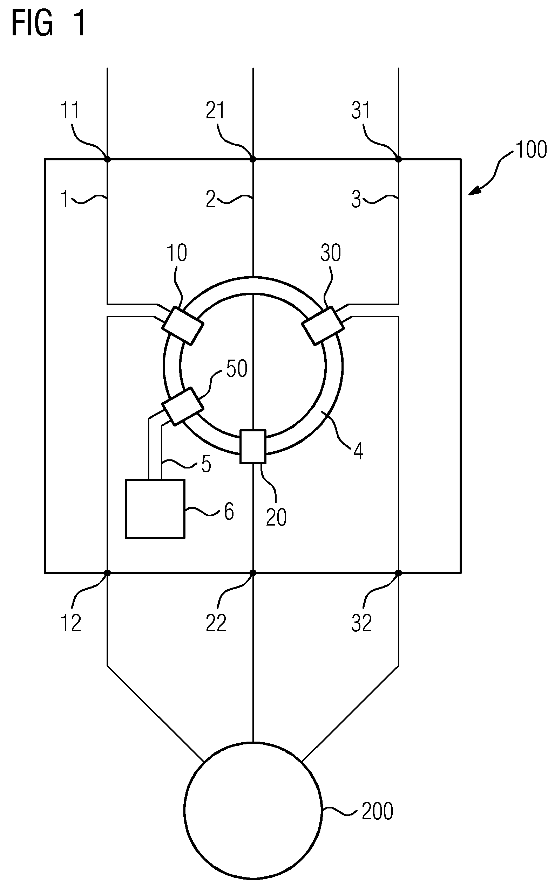

Die Figuren 1, 2 und 3 zeigen jeweils eine schematische Darstellung einer Vorrichtung 100 für einen dreiphasigen Verbraucher 200. Der Verbraucher 200 ist in diesem Ausführungsbeispiel jeweils ein Asynchronmotor. Der Versorgungsstrang des dreiphasigen Verbrauchers 200 wird über die Vorrichtung 100 geführt. Hierfür umfasst die Vorrichtung 100 je Strombahn des Verbrauchers 200 und somit je Phase des Verbrauchers 200 eine eingangsseitige Anschlussstelle 11,21,31 und eine ausgangsseitige Anschlussstelle 12,22,32. Innerhalb der Vorrichtung 100 wird die erste Strombahn des Verbrauchers 200 mittels einer ersten Primärleitung 1 der Vorrichtung 100 von der ersten eingangsseitigen Anschlussstelle 11 zur ersten ausgangsseitigen Anschlussstelle 12 geführt. Die zweite Strombahn des Verbrauchers 200 wird mittels einer zweiten Primärleitung 2 der Vorrichtung 100 von der zweiten eingangsseitigen Anschlussstelle 21 zur zweiten ausgangsseitigen Anschlussstelle 22 geführt. Die dritte Strombahn des Verbrauchers 200 wird mittels einer dritten Primärleitung 3 der Vorrichtung 100 von der dritten eingangsseitigen Anschlussstelle 31 zur dritten ausgangsseitigen Anschlussstelle 32 geführt. Die Primärseite der Vorrichtung 100 wird somit durch die erste, zweite und dritte Primärleitung 1 gebildet.

Die Vorrichtung 100 umfasst ferner einen geschlossenen ferromagnetischen Körper 4. Ferner umfasst die Vorrichtung 100 auf ihrer Sekundärseite eine Sekundärleitung 5, welche um den ferromagnetischen Körper 4 gewickelt ist, so dass eine Sekundärleiterspule 50 vorliegt.

Die erste Primärleitung 1 ist mit mindestens einer Windung um den ferromagnetischen Körper 4 gewickelt, so dass eine erste Primärleiterspule 10 am ferromagnetischen Körper 4 vorliegt. Die zweite Primärleitung 2 ist mit mindestens einer Windung um den ferromagnetischen Körper 4 gewickelt, so dass die zweite Primärleiterspule 20 am ferromagnetischen Körper 4 vorliegt. Die dritte Primärleitung 3 ist mit mindestens einer Windung um den ferromagnetischen Körper 4 gewickelt, so dass die dritte Primärleiterspule 30 am ferromagnetischen Körper 4 vorliegt.

Durch eine Wechselspannung auf der Primärseite der Vorrichtung 100 wird aufgrund der elektromagnetischen Induktion der ersten, zweiten und dritten Primärleiterspulen 10,20,30 ein wechselnder magnetischer Fluss im ferromagnetischen Körper 4 erzeugt. Der wechselnde magnetische Fluss im ferromagnetischen Körper 4 wiederum induziert auf der Sekundärseite der Vorrichtung eine Spannung. Diese Spannung wird mittels der Sekundärleiterspule 50 abgegriffen, so dass hierüber die geräteinterne Energieversorgung der Vorrichtung 100 erfolgt. Die geräteinterne Energieversorgung der Vorrichtung 100 erfolgt in diesem Beispiel lediglich über die Sekundärseite. D.h. es wird lediglich die mit der Sekundärleiterspule 50 am ferromagnetischen Körper 4 abgegriffene elektrische Energie zur Energieversorgung der Vorrichtung 100 genutzt. Mittels der Sekundärleitung 5 wird die abgegriffene elektrische Energie zu den geräteinternen elektrischen Verbrauchern 6 geführt.
Es ist erwünscht, dass bei verschiedenen Betriebszuständen der Vorrichtung der durch die Sekundärleiterspule 50 gewonnene Sekundarstrom sich nicht zu Null ergibt. Dies wird dadurch gelöst, dass die drei Phasenströme auf der ersten, zweiten und dritten Primärleitung 1,2,3 bezüglich ihrer ersten, zweiten und dritten Primärleiterspulen 10,20,30 unterschiedlich gewichtet werden. Die ersten, zweiten und dritten Primärleiterspulen 10,20,30 weisen daher untereinander eine unterschiedliche Induktivität auf.
Das Herbeiführen einer unterschiedlichen Induktivität der Primärleiterspulen 10,20,30 kann auf unterschiedliche Weise realisiert werden. Es kann z.B. das Übersetzungsverhältnis zwischen der Primarseite zur Sekundärseite unterschiedlich ausgebildet sein. Ebenso kann die Effizienz der Energieübertragung zwischen der Primärseite und der Sekundärseite bezüglich der einzelnen Phasen unterschiedlich ausgebildet sein.

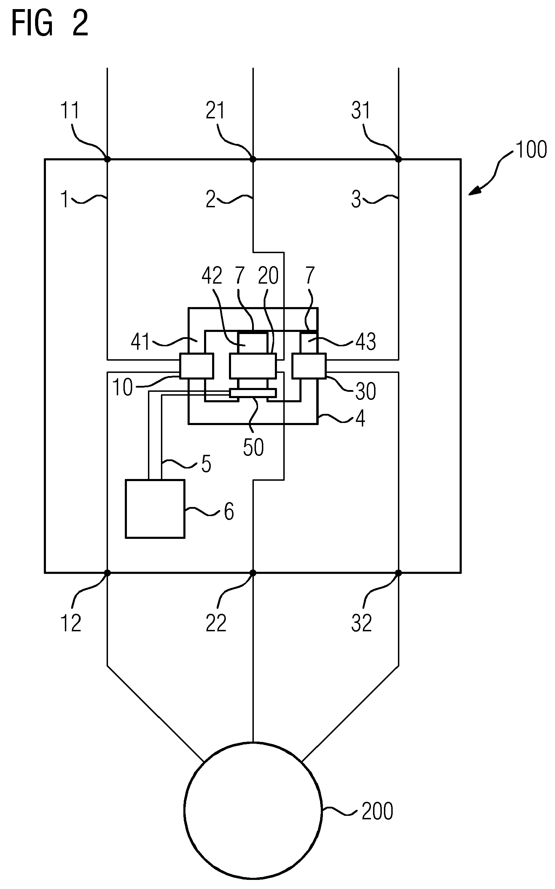

FIG 1 zeigt ein Beispiel einer Vorrichtung 100, bei welchem der ferromagnetische Körper 4 als ringförmiger Eisenkern 4 ausgebildet ist. Die Windungszahlen der Primärleiterspulen 10,20,30 sind so ausgewählt, dass im bestromten Zustand des Verbrauchers 200 und somit ebenso der Vorrichtung 100 der Stromanteil sich von jeder Phase nicht auf der Sekundarseite gegenseitig aufhebt. Dadurch, dass die Induktivitäten der Primärleiterspulen 10,20,30 unterschiedlich ausgebildet sind, kann ebenso bei einem nicht ordnungsgemäßen Betrieb des Verbrauchers 200 (z.B. bei einem Phasenausfall) die Energieversorgung innerhalb der Vorrichtung 100 sichergestellt werden. Als vorteilhaft hat sich das Verhältnis der Windungszahl der ersten, zweiten und dritten Primärleiterspule von 1:2:3 erwiesen.
Für ein Gerät mit einem großen Nennstrom kann es jedoch ungünstig sein, mehr als eine Windung für die Primarleiterspule zu nehmen. Eine Ausführungsform der Erfindung, welche den genannten Nachteil vermeidet, ist in der FIG 2 dargestellt.
In der FIG 2 ist der ferromagnetische Körper 4 E-I-förmig ausgebildet. Ferner ist der ferromagnetische Körper 4 derart ausgestaltet, dass die Induktivitäten der ersten, zweiten und dritten Primärleiterspulen 10,20,30 trotz einer einheitlichen Anzahl an Windungen (hier lediglich eine Windung) unterschiedlich sind. Die Induktivität ist insbesondere von der Kernlänge, dem Kernquerschnitt, dem Abstand zwischen den benachbarten Schenkeln des ferromagnetischen Körpers 4 oder einem ggf. vorhandenen Luftspalt 7 des ferromagnetischen Körpers 4, insbesondere im Bereich der Windungen der Primärleiterspulen 10,20,30, abhängig. Ebenso können die genannten Variablen miteinander kombiniert werden.
Jede Primärleiterspule 10,20,30 sitzt auf einem eigenen Schenkel 41,42,43 des ferromagnetischen Körpers 4, welcher bezüglich Querschnitt, Luftspalt und/oder Abstand zum Schenkel der Sekundarspule 50 unterschiedlich dimensioniert ist. Der erste Schenkel 41 und der dritte Schenkel 43 weisen in diesem Ausführungsbeispiel einen einheitlichen Querschnitt auf. Der zweite Schenkel 42 des ferromagnetischen Körpers 4 weist jedoch gegenüber dem ersten bzw. dritten Schenkel 41, 43 einen größeren Querschnitt auf. Ferner weist der zweite und der dritte Schenkel 42,43 jeweils einen Luftspalt 7 auf.

Bei der Vorrichtung gemäß der FIG 2 hat folglich jede Primärleitung 1,2,3 ebenso einen individuellen Magnetkreis zur Energieübertragung, so dass sich der Stromanteil von jeder Phase im bestromten Zustand der Vorrichtung 100 nicht auf der Sekundarseite gegenseitig aufhebt.

Die erste, zweite und dritte Primärleiterspule weist folglich im bestromten Zustand der Vorrichtung 100 eine unterschiedliche Induktivität auf, so dass selbst bei einem Ausfall einer oder zweier Phasen die Energieversorgung innerhalb der Vorrichtung 100 sichergestellt ist.

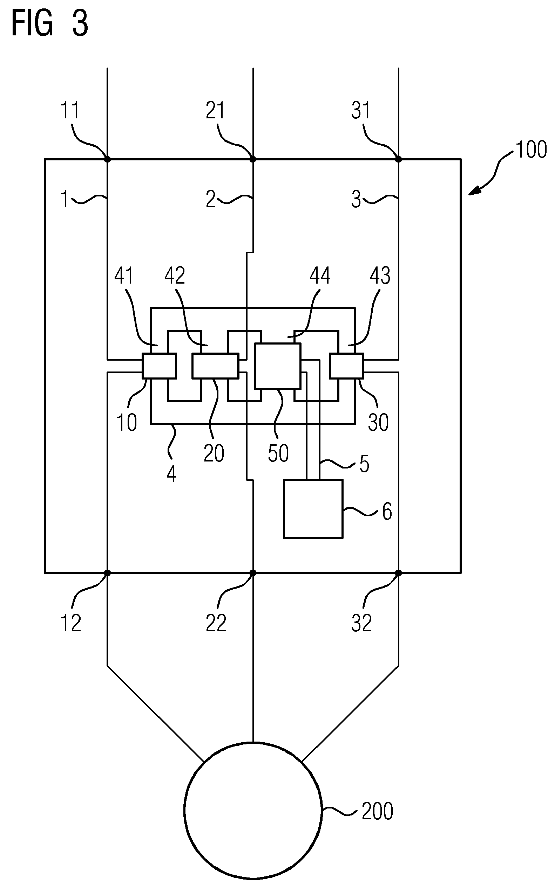

FIG 3 zeigt eine schematische Darstellung einer weiteren alternativen Vorrichtung 100 für einen dreiphasigen Verbraucher 200, bei welchem die Primärleiterspulen 10,20,30 eine einheitliche Anzahl an Windungen aufweisen. Durch die geometrische Form des ferromagnetischen Körpers 4 wird erreicht, dass die ersten, zweiten und dritten Primärleiterspulen 10,20,30 untereinander eine unterschiedliche Induktivität erreichen.

Der erste Schenkel 41 und der dritte Schenkel 43 weisen in diesem Ausführungsbeispiel einen einheitlichen Querschnitt auf. Der zweite Schenkel 42 und der vierte Schenkel 44 des ferromagnetischen Körpers 4 weist jedoch gegenüber dem ersten bzw. dritten Schenkel 41, 43 einen größeren Querschnitt auf. Ferner ist der Abstand des dritten Schenkels 43 zum vierten Schenkel 44 größer als der Abstand des zweiten Schenkels 42 zum vierten Schenkel 44. Des Weiteren ist der Abstand des dritten Schenkels 43 zum vierten Schenkel 44 kleiner als der Abstand des ersten Schenkels 41 zum vierten Schenkel 44. Der zweite Schenkel 42 ist zum benachbarten Schenkel 41,44 jeweils gleich beabstandet.

Die in den einzelnen Ausführungsbeispielen gezeigten Ausführungsvarianten können ebenso untereinander kombiniert werden, so dass eine unterschiedlich verteilte Induktivität bezüglich der Primärleiterspulen 10,20,30 bereitgestellt wird, so dass sich der Stromanteil von jeder Phase im bestromten Zustand der Vorrichtung 100 nicht auf der Sekundarseite gegenseitig aufhebt.

Ein großer Vorteil der Vorrichtung gemäß der Figuren 1,2 und 3 ist, dass bezüglich der internen Energieversorgung der Vorrichtung zwei Eisenkerne und zwei Sekundarwicklungen eingespart werden können. Dies bedeutet Einsparung von Platzbedarf und Herstellungskosten.

Da der Stromwandler (Primärleiterspulen 10,20,30, ferromagnetischer Körper 4, Sekundärleiterspule 50) nur zur Energieversorgung verwendet wird, kann er im Vergleich zu einem Messwandler bezüglich seiner Genauigkeit günstiger ausgelegt werden.

Der ferromagnetische Körper 4 kann ebenso aus einem zweiteiligen geblechten Eisenkern gebildet sein. Hierdurch kann gegenüber einem Ringkernwandler ein günstigeres Bewickeln erfolgen.

Die Anzahl der Windungen der Sekundärleiterspule 50 ist insbesondere in Abhängigkeit der vorliegenden Anzahl an Windungen der Primärleiterspulen 10,20,30 und der Beschaffenheit des ferromagnetischen Körpers 4 zu dimensionieren.

## Patentansprüche

1. Motor- und Leitungsschutzgerät (100) für einen dreiphasigen Verbraucher (200), wobei das Motor- und Leitungsschutzgerät (100) eine erste, zweite und dritte Primärleitung (1,2,3) und einen schenkeligen ferromagnetischen Körper (4) umfasst, wobei die ersten, zweiten und dritten Primärleitungen (1,2,3) jeweils um den ferromagnetischen Körper (4) gewickelt sind, so dass eine erste, eine zweite und eine dritte Primärleiterspule (10,20,30) vorliegt, wobei das Motor- und Leitungsschutzgerät (100) ferner eine um den ferromagnetischen Körper (4) gewickelte Sekundärleiterspule (50) umfasst, wobei die ersten, zweiten und dritten Primärleiterspulen (10,20,30) untereinander eine unterschiedliche Induktivität aufweisen, wobei die Energieversorgung des Motor- und Leitungsschutzgeräts (100) mittels der über die Sekundärleiterspule (50) gewonnenen Energie erfolgt, **dadurch gekennzeichnet, dass** die geometrische Form des ferromagnetischen Körpers (4) derart ausgebildet ist, dass hierdurch für die erste und dritte und/oder zweite Primärleiterspule (10,20,30) untereinander eine unterschiedliche Induktivität erreicht wird, und jede Primärleiterspule (10, 20, 30) auf einem eigenen Schenkel (41, 42, 43) des ferromagnetischen Körpers (4) sitzt.

2. Motor- und Leitungsschutzgerät (100) nach Anspruch 1, wobei die Energieversorgung des Motor- und Leitungsschutzgeräts (100) lediglich mittels der über die Sekundärleiterspule (50) gewonnenen Energie erfolgt.

3. Motor- und Leitungsschutzgerät (100) nach einem der vorhergehenden Ansprüche, wobei die Windungszahlen der ersten und zweiten und/oder dritten Primärleiterspulen (10,20,30) mit dem ferromagnetischen Körper (4) untereinander unterschiedlich sind.

4. Motor- und Leitungsschutzgerät (100) nach einem der vorhergehenden Ansprüche, wobei der ferromagnetische Körper (4) mindestens einen Luftspalt (7) aufweist, so dass hierdurch die erste, zweite und/oder dritte Primärleiterspule (10,20,30) untereinander eine unterschiedliche Induktivität aufweist.

## Claims

1. Motor and line protection device (100) for a three-phase load (200), wherein the motor and line protection device (100) comprises a first, second and third primary line (1, 2, 3) and a hinged ferromagnetic element (4), wherein the first, second and third primary lines (1, 2, 3) are each wound around the ferromagnetic element (4), so that a first, a second and a third primary conductor coil (10, 20, 30) exists, wherein the motor and line protection device (100) also comprises a secondary conductor coil (50) which is wound around the ferromagnetic element (4), wherein the first, second and third primary conductor coils (10, 20, 30) each have a different inductance, wherein power is supplied to the motor and line protection device (100) by means of the power obtained by way of the secondary conductor coil (50), **characterised in that** the geometric form of the ferromagnetic element (4) is embodied such that a different inductance is achieved thereby for each of the first and third and/or second primary conductor coils (10, 20, 30) and each primary conductor coil (10, 20, 30) is positioned on a separate limb (41, 42, 43) of the ferromagnetic element (4).

2. Motor and line protection device (100) according to claim 1, wherein power is supplied to the motor and line protection device (10) solely by means of the power obtained by way of the secondary conductor coil (50).

3. Motor and line protection device (100) according to one of the preceding claims, wherein the number of windings of the first and second and/or third primary conductor coils (10, 20, 30) with the ferromagnetic element (4) differ from one another.

4. Motor and line protection device (100) according to one of the preceding claims, wherein the ferromagnetic element (4) has at least one air gap (7), so that thereby the first, second and/or third primary conductor coils (10, 20, 30) each have a different inductance.

## Revendications

1. Appareil (100) de protection de moteur et de ligne pour une charge (200) triphasée, l'appareil de protection de moteur et de ligne comprenant une première, deuxième et troisième lignes (1, 2, 3) primaires et un corps (4) ferromagnétique ayant des branches, les première, deuxième et troisième lignes (1, 2, 3) primaires étant enroulées respectivement autour du corps (4) ferromagnétique de manière à avoir une première, deuxième et troisième bobines (10, 20, 30) de conducteur primaire, l'appareil (100) de protection de moteur et de ligne comprenant en outre une bobine (50) de conducteur secondaire enroulée autour du corps (4) ferromagnétique, les première, deuxième et troisième bobines (10, 20, 30) primaires ayant entre elles une inductance différente, l'alimentation en énergie de l'appareil (100) de protection de moteur et de ligne s'effectuant au moyen de l'énergie gagnée par l'intermédiaire de la bobine (50) de conducteur secondaire, **caractérisé en ce que** la forme géométrique du corps (4) ferromagnétique est constituée de manière à obtenir ainsi pour la première et troisième et/ou deuxième bobines (10, 20, 30) de conducteur primaire entre elles une inductance différente et chaque bobine (10, 20, 30) de conducteur primaire est mise sur sa propre branche (41, 42, 43) du corps (4) ferromagnétique.

2. Appareil (100) de protection de moteur et de ligne suivant la revendication 1, dans lequel l'alimentation en énergie de l'appareil (100) de protection de moteur et de ligne s'effectue seulement au moyen de l'énergie gagnée par l'intermédiaire de la bobine (50) de conducteur secondaire.

3. Appareil (100) de protection de moteur et de ligne suivant l'une des revendications précédentes, dans lequel les nombres de spires des première et deuxième et/ou troisième bobines (10, 20, 30) primaires avec le corps (4) ferromagnétique sont différents entre eux.

4. Appareil (100) de protection de moteur et de ligne suivant l'une des revendications précédentes, dans lequel le corps (4) ferromagnétique a au moins un entrefer (7) de manière à ce que la première, deuxième et/ou troisième bobines (10, 20, 30) de conducteur primaire ait entre elles une inductance différente.
